# EUROPÄISCHE PATENTSCHRIFT

(11) **EP 2 619 028 B1**
(45) Veröffentlichungstag und Bekanntmachung des Hinweises auf die Patenterteilung: **16.08.2017**
(21) Anmeldenummer: 11751549.4
(22) Anmeldetag: 26.08.2011
(51) Int. Cl.: B60N 2/235

(54) **BESCHLAG FÜR EINEN FAHRZEUGSITZ**
FITTING FOR A VEHICLE SEAT
FERRURE POUR UN SIÈGE DE VÉHICULE

(30) Priorität: 22.09.2010 DE 102010046728
(43) Veröffentlichungstag der Anmeldung: 31.07.2013
(73) Patentinhaber: Adient Luxembourg Holding S.à r.l., 2453 Luxembourg (LU)
(72) Erfinder: BECKER, Martin, 42369 Wuppertal (DE); PETERS, Christoph, 42929 Wermelskirchen (DE); VOSSMANN, Gregor, 49757 Werlte (DE)
(74) Vertreter: Liedhegener, Ralf
(86) Internationale Anmeldenummer: PCT/EP2011/004302
(87) Internationale Veröffentlichungsnummer: WO 2012/038020

(56) Entgegenhaltungen:
- DE-A1- 10 028 119
- DE-A1- 10 327 922

## Beschreibung

Die Erfindung betrifft einen Beschlag für einen Fahrzeugsitz mit den Merkmalen des Oberbegriffs des Anspruches 1.

Ein Beschlag dieser Art ist aus der DE 100 28 119 A1 bekannt. Die beiden in Umfangsrichtung relativ zueinander drehbaren, scheibenförmigen Beschlagteile werden durch einen Umklammerungsring axial zusammengehalten und sind mittels dreier radial beweglicher Riegel miteinander verriegelbar. Die mit dem ersten Beschlagteil verriegelnden und vom zweiten Beschlagteil geführten Riegel werden durch einen Exzenter beaufschlagt, der wiederum von einer Federanordnung beaufschlagt wird. Die als Spiralfeder ausgebildete Federanordnung sitzt in einer als napfartige Vertiefung ausgebildeten, zentralen Aufnahme im zweiten Beschlagteil.

In der DE 103 27 922 B4 wird vorgeschlagen, den Boden der napfartigen Vertiefung entfallen zu lassen, so dass die zentrale Aufnahme für die Federanordnung ein Durchgangsloch wird. Damit wird eine geringere axiale Abmessung des Beschlags erreicht, jedoch besteht wegen der offen liegenden Federanordnung die Gefahr des Eindringens von Fremdkörpern und der Verschmutzung und Beschädigung der Bauteile des Beschlags.

Um die offen liegende Federanordnung abzudecken, wird zum Drehen des Exzenters in der DE 10 2006 015 560 B3 und der DE 20 2008 015 560 B3 ein Mitnehmer verwendet, welcher mit einem Mitnehmerdeckel zusammenwirkt, der flach am zweiten Beschlagteil anliegt. Die DE 10 2008 024 853 A1 verwendet einen Mitnehmer, welcher mit einem Schweißringring zusammenwirkt und auf welchen ein separat ausgebildeter, ringförmiger, flacher Mitnehmerdeckel aufgeschoben und optional stoffschlüssig verbunden ist. Der Mitnehmer dreht sich mit dem Mitnehmerdeckel zusammen relativ zum zweiten Beschlagteil.

Der Erfindung liegt die Aufgabe zu Grunde, einen Beschlag der eingangs genannten Art zu verbessern, insbesondere hinsichtlich des Gewichts des Beschlags bei gleichzeitiger Kapselung der Bauteile vor Schmutz. Diese Aufgabe wird erfindungsgemäß durch einen Beschlag mit den Merkmalen des Anspruches 1 gelöst. Vorteilhafte Ausgestaltungen sind Gegenstand der Unteransprüche.

Indem das zweite Beschlagteil zweiteilig mit einem Führungsteil und einem topfförmigen Deckel ausgebildet ist, kann für den Deckel, der außerhalb des Kraftflusses liegt, eine geringere Materialstärke und/oder ein leichteres Material gewählt werden, was gegenüber dem aus der DE 100 28 119 A1 bekannten Beschlag zu einer Gewichtsersparnis führt. Gegenüber dem aus der DE 103 27 922 B4 bekannten Beschlag besteht der Vorteil, dass der Deckel die innen liegenden Bauteile des Beschlags abkapselt und dadurch vor dem Eindringen von Fremdkörpern und der Verschmutzung und Beschädigung schützt. Ferner können unterschiedlich starke Federanordnungen mit gleichem Durchmesser und mit unterschiedlicher axialer Abmessung vom gleichen Führungsteil und von unterschiedlichen Deckeln aufgenommen werden, d.h. es ist ein kostengünstiger Baukasten zur Anpassung des Beschlags an unterschiedliche axiale Abmessungen der Federanordnung möglich. Dies ist mit den flachen Abdeckscheiben der Mitnehmer nicht möglich. Gegenüber der Materialstärke des Führungsteils des zweiten Beschlagteils kann die Materialstärke des Deckels geringer sein, so dass gegenüber dem bekannten einteiligen zweiten Beschlagteil mit napfartiger Vertiefung auch geringere Abmessungen möglich sind.

Um zum Entriegeln des Beschlags den Exzenter entgegen der Vorspannung der Federanordnung zu beaufschlagen, ist vorzugsweise ein (manuell) drehbarer Mitnehmer vorgesehen. Der erfindungsgemäß vorgesehene Deckel kann nicht nur als axiale Anlagefläche des Mitnehmers dienen, er kann den Mitnehmer auch drehbar lagern, d.h. der Mitnehmer dreht sich im Deckel relativ zu letzterem.

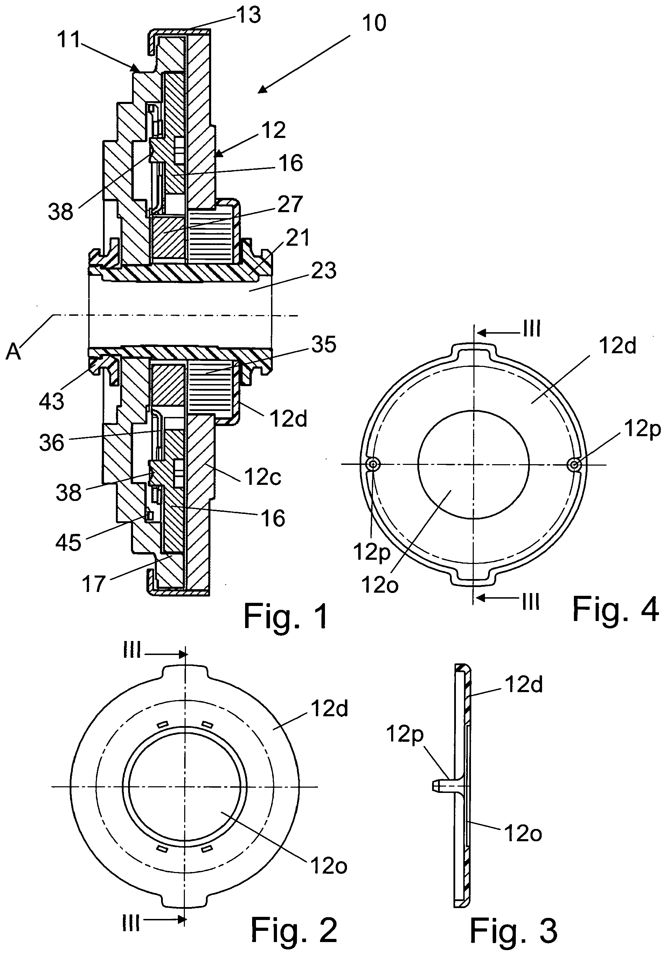

Im folgenden ist die Erfindung anhand eines in der Zeichnung dargestellten Ausführungsbeispiels näher erläutert. Es zeigen
- Fig. 1: einen axialen Schnitt durch das Ausführungsbeispiel,
- Fig. 2: die axial nach außen weisende Stirnseite des Deckels,
- Fig. 3: einen Schnitt durch den Deckel entlang der Linie III-III in Fig. 2 und 4,
- Fig. 4: die axial nach innen weisende Stirnseite des Deckels,

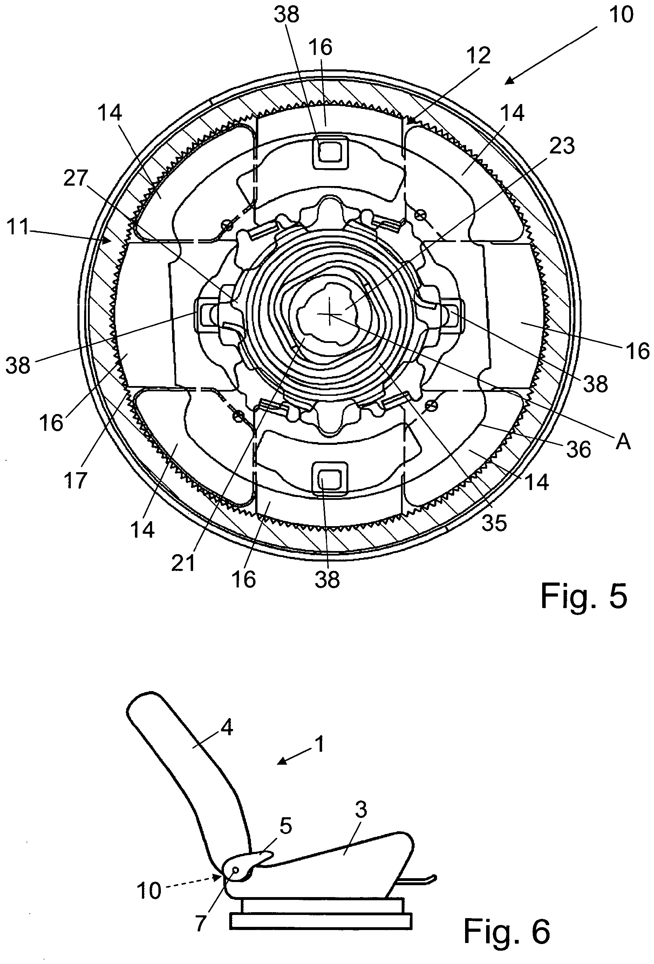

- Fig. 5: einen radialen Schnitt durch das Ausführungsbeispiel, und
- Fig. 6: eine schematische Darstellung eines Fahrzeugsitzes.

Ein Fahrzeugsitz 1 für ein Kraftfahrzeug weist ein Sitzteil 3 und eine relativ zum Sitzteil 3 in ihrer Neigung einstellbare Lehne 4 auf. Zur Neigungseinstellung der Lehne 4 wird manuell, beispielsweise mittels eines Handhebels 5, eine Übertragungsstange 7 gedreht, welche horizontal im Übergangsbereich zwischen Sitzteil 3 und Lehne 4 angeordnet ist. Auf beiden Seiten des Fahrzeugsitzes 1 greift die Übertragungsstange 7 in einen Beschlag 10 ein. Die Übertragungsstange 7 fluchtet mit einer Achse A, welche die verwendeten Richtungsangaben eines Zylinderkoordinatensystems definiert.

Der Beschlag 10 weist ein erstes Beschlagteil 11 und ein zweites Beschlagteil 12 auf, welche relativ zueinander um die Achse A verdrehbar sind. Die beiden Beschlagteile 11 und 12 lassen sich jeweils näherungsweise in eine kreisrunde Scheibenform einbeschreiben. Beide Beschlagteile 11 und 12 bestehen vorzugsweise aus Metall, insbesondere Stahl, der wenigstens bereichsweise gehärtet sein kann. Zur Aufnahme der axial wirkenden Kräfte, also zum Zusammenhalt der Beschlagteile 11 und 12, ist ein Umklammerungsring 13 vorgesehen. Das Prinzip eines solchen Zusammenhalts mittels eines Umklammerungsrings ist beispielsweise in der US 6,799,806 B2 beschrieben. Der Umklammerungsring 13 besteht vorzugsweise aus Metall, insbesondere Stahl, der vorzugsweise ungehärtet ist.

Der Umklammerungsring 13 ist fest mit einem der beiden Beschlagteile 11 und 12 verbunden, vorliegend in einem äußeren Ringabschnitt mit dem zweiten Beschlagteil 12, beispielsweise verschweißt oder in alternativer Ausführung (in Umfangsrichtung wenigstens teilweise) umgebördelt. Mittels seines radial nach innen weisenden Randes, d.h. vorliegend eines in einer zu axialen Richtung senkrechten Ebene angeordneten, inneren Ringabschnitts, übergreift der Umklammerungsring 13, gegebenenfalls unter Zwischenlage eines separaten Gleitrings, das relativ zu ihm bewegliche, andere der beiden Beschlagteile 11 und 12 radial außen (d.h. in dessen radial äußerem Randbereich), ohne die Relativdrehung der beiden Beschlagteile 11 und 12 zu behindern. Zudem werden die einander zugewandten Innenflächen der beiden Beschlagteile 11 und 12 vor dem Eindringen von Fremdkörpern und der Verschmutzung und Beschädigung geschützt.

Der Umklammerungsring 13 und das mit ihm fest verbundene Beschlagteil 11 oder 12 umklammern also das relativ zu ihnen bewegliche, andere der beiden Beschlagteile 11 und 12. In baulicher Hinsicht bilden die beiden Beschlagteile 11 und 12 daher zusammen (mit dem Umklammerungsring 13) eine scheibenförmige Einheit.

Mit der Montage des Beschlags 10 ist das erste Beschlagteil 11 beispielsweise fest mit der Struktur der Lehne 4 verbunden, also lehnenfest. Das zweite Beschlagteil 12 ist dann fest mit der Struktur des Sitzteils 3 verbunden, also sitzteilfest. Diese Zuordnungen der Beschlagteile 11 und 12 sind bevorzugt, wenn die radialen Abstände der Befestigungspunkte zwischen dem Beschlag 10 und einem relativ dünnen Lehnenblech als Lehnenseitenholm möglichst groß sein sollen. Die Zuordnungen der Beschlagteile 11 und 12 können jedoch auch vertauscht sein, d.h. das erste Beschlagteil 11 wäre dann sitzteilfest und das zweite Beschlagteil 12 lehnenfest. Der Beschlag 10 liegt im Kraftfluss zwischen Lehne 4 und Sitzteil 3.

Der Beschlag 10 ist als Rastbeschlag ausgebildet, bei welchem das erste Beschlagteil 11 und das zweite Beschlagteil 12 miteinander verriegelbar sind, wie es beispielsweise in der DE 10 2006 015 560 B3 beschrieben ist, deren diesbezüglicher Offenbarungsgehalt ausdrücklich einbezogen wird.

Das zweite Beschlagteil 12 weist - vorliegend vier - Führungssegmente 14 auf, welche mit geraden Führungsflächen paarweise jeweils einen Riegel 16 seitlich in radialer Richtung führen. Die - vorliegend insgesamt vier - Riegel 16 sind - vorliegend um je 90° - versetzt zueinander in einem zwischen den beiden Beschlagteilen 11 und 12 definierten Bauraum angeordnet. Die Riegel 16 sind an ihrem radial außen liegenden Ende mit einer Verzahnung versehen, die mit einem Zahnkranz 17 des als Hohlrad ausgebildeten ersten Beschlagteils 11 in Eingriff gelangen (einfallen) kann. Wenn der Zahnkranz 17 und die Riegel 16 zusammenwirken, ist der Beschlag 10 verriegelt. Die Führungssegmente 14 liegen mit jeweils einer gebogenen Lagerfläche am Zahnkranz 17 des ersten Beschlagteils 11 an, wodurch die beiden Beschlagteile 11 und 12 einander lagern.

Im Zentrum des Beschlags 10 ist ein Mitnehmer 21 angeordnet, beispielsweise aus Kunststoff, welcher mittels einer zentralen Bohrung 23 drehfest - oder wenigstens auf Mitnahme gekoppelt - auf der Übertragungsstange 7 sitzt und drehbar an wenigstens einem der beiden Beschlagteile 11 und 12, vorliegend dem ersten Beschlagteil 11, gelagert ist, genauer gesagt in einer zentralen Öffnung desselben. Auf dem Mitnehmer 21 sitzt drehfest oder wenigstens auf Mitnahme gekoppelt ein Exzenter 27, welcher in dem zwischen den Beschlagteilen 11 und 12 definierten Bauraum angeordnet ist. Eine Federanordnung 35, beispielsweise zwei ineinander geschachtelte Spiralfedern, ist in einer zentralen Aufnahme eines der beiden Beschlagteile 11 und 12, vorliegend des zweiten Beschlagteils 12, angeordnet und vorliegend außen abgestützt. Die Federanordnung 35 beaufschlagt den Exzenter 27, vorliegend indem sie innen drehfest auf dem Mitnehmer 21 sitzt. Der von der Federanordnung 35 beaufschlagte Exzenter 27 wirkt auf die radial beweglichen Riegel 16 ein und beaufschlagt diese, so dass sie radial nach außen gedrückt werden, um in den Zahnkranz 17 einzufallen, womit der Beschlag 10 verriegelt ist. Somit definieren der Zahnkranz 17, die Riegel 16, der Exzenter 27 und der Mitnehmer 21 zusammen mit der Federanordnung 35 eine Verriegelungsvorrichtung.

Eine Steuerscheibe 36 ist im Bauraum axial zwischen den Riegeln 16 und dem ersten Beschlagteil 11 angeordnet und sitzt vorliegend drehfest auf dem Exzenter 27. Die Steuerscheibe 36 weist - vorliegend vier - Steuerbahnen auf, die jeweils mit einer Nase 38 jedes Riegels 16 zusammenwirken. Die Nasen 38 stehen dabei in axialer Richtung von den ihnen zugeordneten Riegeln 16 ab. Der Mitnehmer 21 ist axial gesichert durch einen Sicherungsring 43, welcher bei der Montage des Beschlags 10 am Mitnehmer 21 befestigt wird, vorzugsweise aufgeclipst wird. Der Mitnehmer 21 und der Sicherungsring 43 weisen je einen Flansch auf, der jeweils auf der Außenseite eines der beiden Beschlagteile 11 oder 12 anliegt, und der als Dichtung wirkt. Bei einer Drehung (um wenige Grad) des Mitnehmers 21 - und des damit angetriebenen Exzenters 27 und der Steuerscheibe 36 - entgegen der Kraft der Federanordnung 35 zieht die Steuerscheibe 36 die Riegel 16 radial nach innen, d.h. aus dem Zahnkranz 17, womit der Beschlag 10 entriegelt ist und die beiden Beschlagteile 11 und 12 relativ zueinander um die Achse A verdrehbar sind. Die Neigung der Lehne 4 ist dadurch zwischen mehreren, zum Sitzgebrauch geeigneten Gebrauchsstellungen einstellbar.

Bei zweitürigen Kraftfahrzeugen soll mittels Freischwenken der Lehne 4 der Zugang zu einer hinteren Sitzreihe erleichtert werden, wofür die entriegelte Lehne 4 aus einer der Gebrauchsstellungen nach vorne in eine nicht zum Sitzgebrauch geeignete, freigeschwenkte Stellung geschwenkt wird. Es erhöht den Bedienkomfort, wenn der Handhebel 5 - oder ein weiteres Betätigungselement - nicht während des gesamten Freischwenkens gehalten werden muss und die Beschläge trotzdem erst in der freigeschwenkten Stellung verriegeln. Im Beschlag 10 ist hierfür zwischen der Steuerscheibe 36 und dem ersten Beschlagteil 11 um die Achse A herum ein ringförmiges Freischwenk-Steuerelement 45 vorgesehen, welches drehfest mit dem ersten Beschlagteil 11 verbunden ist. Das Freischwenk-Steuerelement 48 weist Anschlagbahnen auf, die mit den Nasen 38 der Riegel 16 zusammenwirken, indem sie deren Bewegung radial nach außen begrenzen oder diese ungehindert einfallen lassen. Um die Lehne 4 über mehr als den Winkel zwischen zwei Riegeln 16 freischwenken zu können, sind die Nasen 38 der Riegel 16 abwechselnd unterschiedlich weit radial außen oder radial innen an den ihnen zugeordneten Riegeln 16 angeordnet, so dass benachbarte Nasen 38 mit unterschiedlichen Anschlagbahnen zusammenwirken. Entsprechend sind zwei unterschiedliche Ausbildungen der Riegel 16 vorgesehen. Details sind in der DE 10 2006 015 560 B3 beschrieben.

Das zweite Beschlagteil 12 ist erfindungsgemäß nicht einstückig ausgebildet, sondern besteht aus zwei separat ausgebildeten und zusammengefügten Einzelteilen, nämlich einem Führungsteil 12c und einem Deckel 12d, welche beide konzentrisch zur Achse A und zueinander axial versetzt angeordnet sind. Das - vorzugsweise metallische - Führungsteil 12c weist die Führungssegmente 14 auf, stützt die Federanordnung 35 ab und ist fest mit dem Umklammerungsring 13 verbunden. Der - vorzugsweise aus Kunststoff hergestellte - Deckel 12d deckt die Federanordnung 35 auf der Außenseite des zweiten Beschlagteils 12 ab, stellt die axiale Anlagefläche für die Anlage des Flansches des Mitnehmers 21 zur Verfügung und lagert optional auch den Mitnehmer 21 drehbar. Der Deckel 12d liegt dicht am Führungsteil 12c an, so dass der Beschlag 10 an dieser Stelle vor dem Eindringen von Fremdkörpern und der Verschmutzung und Beschädigung geschützt ist.

Der Deckel 12d ist mit dem Führungsteil 12c (fest) verbunden, vorliegend indem zwei vom Deckel 12d axial abstehende Zapfen 12p in entsprechende, vorzugsweise als Bohrungen ausgebildete Aufnahmen des Führungsteils 12c gesteckt sind, vorzugsweise gepresst sind. Außer der Presspassung ist auch eine Clipsverbindung denkbar, beispielsweise indem der Deckel 12d einen Hinterschnitt des Führungsteils 12c mit Federarmen hintergreift. Alternativ sind weitere bekannte formschlüssige und/oder stoffschlüssige und/oder kraftschlüssige Verbindungen denkbar. Führungsteil 12c und Deckel 12d definieren gemeinsam die zentrale Aufnahme für die Federanordnung 35.

Der Deckel 12d ist topfförmig ausgebildet, d.h. er weist einen scheibenförmigen Bodenbereich mit einer zentralen, mit der Achse A fluchtenden Öffnung 12o für den Mitnehmer 21 (zur Lagerung oder lediglich zum Durchtritt) und einen zylindrischen Wandbereich auf, der stirnseitig am Führungsteil 12c anliegt. Die radiale Abmessung des Bodenbereichs ist mindestens so groß wie die radiale Abmessung der Federanordnung 35 und der zentralen Aufnahme des zweiten Beschlagteils 12. Die axiale Abmessung des Wandbereichs ist mindestens so groß, dass ein axialer Überstand der Federanordnung 35 über die Außenseite des zweiten Beschlagteils 12 abgedeckt wird. Die axiale Abmessung der zentralen Aufnahme des zweiten Beschlagteils 12 für die Federanordnung 35 entspricht somit der Summe aus der axialen Abmessung des Führungsteils 12c und der axialen (Innen-)Abmessung des Wandbereichs des Deckels 12d.

### Bezugszeichenliste

- 1: Fahrzeugsitz
- 3: Sitzteil
- 4: Lehne
- 5: Handhebel
- 7: Übertragungsstange
- 10: Beschlag
- 11: erstes Beschlagteil
- 12: zweites Beschlagteil
- 12c: Führungsteil
- 12d: Deckel
- 12o: Öffnung
- 12p: Zapfen
- 13: Umklammerungsring
- 14: Führungssegment
- 16: Riegel
- 17: Zahnkranz
- 21: Mitnehmer
- 23: Bohrung
- 27: Exzenter
- 35: Federanordnung
- 36: Steuerscheibe
- 38: Nase
- 43: Sicherungsring
- 45: Freischwenk-Steuerelement
- A: Achse

## Patentansprüche

1. Beschlag für einen Fahrzeugsitz, insbesondere für einen Kraftfahrzeugsitz, mit
a) einem ersten Beschlagteil (11) und einem zweiten Beschlagteil (12), welche relativ zueinander um eine Achse (A) verdrehbar sind, wobei an einem der Beschlagteile (11, 12) ein Zahnkranz (17) und am anderen der Beschlagteile (11, 12) Führungssegmente (14) zur Führung von Riegeln (16) ausgebildet sind,
b) einem drehbar gelagerter Exzenter (27), welcher die radial verschieblichen Riegel (16) beaufschlagt, die dann mit dem Zahnkranz (17) zusammenwirken, um den Beschlag (10) zu verriegeln, und
c) einer Federanordnung (35), welche den Exzenter (27) beaufschlagt und welche in einer zentralen Aufnahme des zweiten Beschlagteils (12) angeordnet ist,
wobei
d) das zweite Beschlagteil (12) ein Führungsteil (12c) mit den Führungen (14) und einen Deckel (12d) zum Abdecken der Federanordnung (35) aufweist, wobei das Führungsteil (12c) und der Deckel (12d) separat ausgebildet und miteinander verbunden sind,
**dadurch gekennzeichnet, dass**
e) der Deckel (12d) topfförmig ausgebildet ist.

2. Beschlag nach Anspruch 1, **dadurch gekennzeichnet, dass** das Führungsteil (12c) aus Metall und der Deckel (12d) aus Kunststoff ausgebildet ist.

3. Beschlag nach einem der vorhergehenden Ansprüche, **dadurch gekennzeichnet, dass** das Führungsteil (12c) und der Deckel (12d) mittels einer Presspassung, beispielsweise von Zapfen, mittels einer Clipsverbindung oder mittels einer anderen formschlüssigen und/oder kraftschlüssigen Verbindung miteinander verbunden sind.

4. Beschlag nach einem der vorhergehenden Ansprüche, **dadurch gekennzeichnet, dass** das Führungsteil (12c) und Deckel (12d) gemeinsam die zentrale Aufnahme für die Federanordnung (35) definieren.

5. Beschlag nach einem der vorhergehenden Ansprüche, **dadurch gekennzeichnet, dass** der Deckel (12d) eine mit der Achse (A) fluchtende Öffnung (12o) aufweist.

6. Beschlag nach einem der vorhergehenden Ansprüche, **dadurch gekennzeichnet, dass** ein drehbar gelagerter Mitnehmer (21) vorgesehen ist, welcher mit dem Exzenter (27) drehfest oder wenigstens auf Mitnahme gekoppelt ist, um den Beschlag (10) zu entriegeln, wobei die Federanordnung (35) den Exzenter (27) unmittelbar oder mittels des Mitnehmers (21) beaufschlagt.

7. Beschlag nach Anspruch 6, **dadurch gekennzeichnet, dass** der Deckel (12c) eine axiale Anlagefläche für die Anlage des Mitnehmers (21) zur Verfügung stellt.

8. Beschlag nach Anspruch 6 oder 7, **dadurch gekennzeichnet, dass** der Deckel (12d) den Mitnehmer (21) lagert, insbesondere mittels einer mit der Achse (A) fluchtenden Öffnung (12o).

9. Beschlag nach einem der vorhergehenden Ansprüche, **dadurch gekennzeichnet, dass** ein Umklammerungsring (13) die Beschlagteile (11, 12) axial zusammenhält.

10. Fahrzeugsitz, insbesondere Kraftfahrzeugsitz, mit einem Beschlag (10) nach einem der vorhergehenden Ansprüche.

## Claims

1. Fitting for a vehicle seat, in particular for a motor vehicle seat, with
a) a first fitting part (11) and a second fitting part (12), which are rotatable relative to each other about an axis (A), wherein a toothed ring (17) is formed on one of the fitting parts (11, 12) and guide segments (14) for guiding bolts (16) are formed on the other of the fitting parts (11, 12),
b) a rotatably mounted eccentric (27) which acts upon the radially displaceable bolts (16) which then interact with the toothed ring (17) in order to lock the fitting (10), and
c) a spring arrangement (35) which acts upon the eccentric (27) and which is arranged in a central receptacle of the second fitting part (12),
wherein
d) the second fitting part (12) has a guide part (12c) with the guides (14), and a cover (12d) for covering the spring arrangement (35), wherein the guide part (12c) and the cover (12d) are formed separately and are connected to each other,
**characterized in that**
e) the cover (12d) is of cup-shaped design.

2. Fitting according to Claim 1, **characterized in that** the guide part (12c) is formed from metal and the cover (12d) is formed from plastic.

3. Fitting according to either of the preceding claims, **characterized in that** the guide part (12c) and the cover (12d) are connected to each other by means of a press fit, for example by studs, by means of a clip connection or by means of another interlocking and/or frictional connection.

4. Fitting according to one of the preceding claims, **characterized in that** the guide part (12c) and cover (12d) together define the central receptacle for the spring arrangement (35).

5. Fitting according to one of the preceding claims, **characterized in that** the cover (12d) has an opening (12o) aligned with the axis (A).

6. Fitting according to one of the preceding claims, **characterized in that** a rotatably mounted driver (21) is provided, said driver being coupled to the eccentric (27) for conjoint rotation or at least for carrying the latter along, in order to unlock the fitting (10), wherein the spring arrangement (35) acts upon the eccentric (27) directly or by means of the driver (21).

7. Fitting according to Claim 6, **characterized in that** the cover (12c) provides an axial contact surface for the contact of the driver (21).

8. Fitting according to Claim 6 or 7, **characterized in that** the cover (12d) supports the driver (21), in particular by means of an opening (12o) aligned with the axis (A).

9. Fitting according to one of the preceding claims, **characterized in that** a clasping ring (13) holds the fitting parts (11, 12) together axially.

10. Vehicle seat, in particular motor vehicle seat, with a fitting (10) according to one of the preceding claims.

## Revendications

1. Ferrure pour un siège de véhicule, en particulier pour un siège de véhicule automobile, avec
a) une première partie de ferrure (11) et une seconde partie de ferrure (12), qui peuvent tourner l'une par rapport à l'autre autour d'un axe (A), dans laquelle une couronne dentée (17) est formée sur une des parties de ferrure (11, 12) et des segments de guidage (14) pour le guidage de verrous (16) sont formés sur l'autre des parties de ferrure (11, 12),
b) un excentrique monté de façon rotative (27), qui agit sur les verrous (16) déplaçables radialement, qui coopèrent alors avec la couronne dentée (17) afin de verrouiller la ferrure (10), et
c) un système de ressorts (35), qui agit sur l'excentrique (27) et qui est disposé dans un logement central de la seconde partie de ferrure (12),
dans laquelle
d) la seconde partie de ferrure (12) présente une partie de guidage (12c) avec les guides (14) et un couvercle (12d) pour couvrir le système de ressorts (35), dans laquelle la partie de guidage (12c) et le couvercle (12d) sont formés séparément et sont reliés l'un à l'autre,
**caractérisée en ce que**
e) le couvercle (12d) est réalisé en forme de godet.

2. Ferrure selon la revendication 1, **caractérisé en ce que** la partie de guidage (12c) est réalisée en métal et le couvercle (12d) est réalisé en matière plastique.

3. Ferrure selon l'une quelconque des revendications précédentes, **caractérisée en ce que** la partie de guidage (12c) et le couvercle (12d) sont assemblés l'un à l'autre au moyen d'un ajustement serré, par exemple de tenons, au moyen d'un assemblage encliqueté ou au moyen d'un autre assemblage par emboîtement et/ou par adhérence.

4. Ferrure selon l'une quelconque des revendications précédentes, **caractérisée en ce que** la partie de guidage (12c) et le couvercle (12d) définissent ensemble le logement central pour le système de ressorts (35).

5. Ferrure selon l'une quelconque des revendications précédentes, **caractérisée en ce que** le couvercle (12d) présente une ouverture (12o) en alignement avec l'axe (A).

6. Ferrure selon l'une quelconque des revendications précédentes, **caractérisée en ce qu'**il est prévu un entraîneur (21) monté de façon rotative, qui est couplé de façon calée en rotation ou au moins par l'entraînement avec l'excentrique (27), afin de déverrouiller la ferrure (10), dans laquelle le système de ressorts (35) agit sur l'excentrique (27) directement ou au moyen de l'entraîneur (21).

7. Ferrure selon la revendication 6, **caractérisée en ce que** le couvercle (12c) procure une face d'appui axiale pour l'appui de l'entraîneur (21).

8. Ferrure selon la revendication 6 ou 7, **caractérisée en ce que** le couvercle (12d) supporte l'entraîneur (21), en particulier au moyen d'une ouverture (12o) en alignement avec l'axe (A).

9. Ferrure selon l'une quelconque des revendications précédentes, **caractérisée en ce qu'**un anneau d'agrafage (13) solidarise axialement les parties de ferrure (11, 12).

10. Siège de véhicule, en particulier siège de véhicule automobile, doté d'une ferrure (10) selon l'une quelconque des revendications précédentes.
